# EUROPEAN PATENT APPLICATION

(11) **EP 4 696 906 A1**
(43) Date of publication of application: **18.02.2026**
(21) Application number: 25195463.2
(22) Date of filing: 12.08.2025
(51) Int. Cl.: F16H 57/02, F16H 57/023, F16H 57/031

(54) **POWER TRANSMISSION DEVICE**

(30) Priority: 13.08.2024 JP 2024134805
(71) Applicant: Kubota Corporation, Osaka-shi, Osaka 556-8601 (JP)
(72) Inventor: IWASE, Ryoma, SAKAI-SHI, OSAKA, 5900908 (JP); MATSUO, Takahiro, SAKAI-SHI, OSAKA, 5900908 (JP); AIKAWA, Hiroyuki, SAKAI-SHI, OSAKA, 5900908 (JP); DATE, Koki, SAKAI-SHI, OSAKA, 5900908 (JP); TAKEWA, Noriaki, SAKAI-SHI, OSAKA, 5900908 (JP); KUBOTA, Makoto, SAKAI-SHI, OSAKA, 5900908 (JP)
(74) Representative: Cabinet Beau de Loménie

(57) **Abstract**

The disclosure facilitates assembly of a power transmission device (11) in comparison to a conventional device.

The power transmission device (11) includes a housing (31), and a power transmission instrument (41) including a plurality of gears accommodated in the housing (31). The housing (31) includes an outer peripheral wall (32) covering to surround the power transmission instrument (41), and a front wall (33) covering the power transmission instrument (41) from ahead thereof. The housing (31) is shaped to be opened backward. The power transmission instrument (41) is positioned behind the front wall (33) except for a member penetrating the front wall (33).

## Description

### TECHNICAL FIELD

The present invention relates to a power transmission device.

### BACKGROUND ART

PATENT LITERATURE 1 discloses a power transmission device mounted on a working vehicle. As illustrated in FIG. 11 and FIG. 12 of PATENT LITERATURE 1, the power transmission device includes a housing accommodating a power transmission instrument including a plurality of gears and the like. The housing includes an intermediate wall disposed halfway in a longitudinal direction (axial direction) thereof.

### CITATION LIST

### [PATENT LITERATURE]

PATENT LITERATURE 1: Japanese Laid-Open Patent Publication No. 2007-83968

### SUMMARY OF THE INVENTION

A power transmission device includes a housing, and a power transmission instrument including a plurality of gears accommodated in the housing, in which the housing includes an outer peripheral wall covering to surround the power transmission instrument, and a front wall covering the power transmission instrument from ahead thereof, the housing is shaped to be opened backward, and the power transmission instrument is positioned behind the front wall except for a member penetrating the front wall.

### BRIEF DESCRIPTION OF DRAWINGS

FIG. 1 is a side view exemplarily illustrating a working vehicle.
FIG. 2 is a perspective view exemplarily illustrating a power transmitter.
FIG. 3 is an exploded view of a power transmission device.
FIG. 4 is a sectional view of the power transmission device.
FIG. 5 is another sectional view of the power transmission device.
FIG. 6 is still another sectional view of the power transmission device.
FIG. 7 is a perspective view of a first unit.
FIG. 8 is a perspective view of a second unit.
FIG. 9 is a perspective view of a third unit.
FIG. 10 is an explanatory view of an attachment portion of the third holder to an outer peripheral wall.

### DETAILED DESCRIPTION

### [TECHNICAL PROBLEM]

As described above, a conventional power transmission device includes a housing including an intermediate wall disposed halfway in a longitudinal direction (axial direction) thereof. Upon assembling the conventional power transmission device, a first unit (transmission gear) including an input shaft is thus attached to the intermediate wall through a front opening of the housing. The housing includes a front lid attached so as to cover the first unit attached to the intermediate wall.

A second unit including a shaft configured to receive power from the first unit (transmission gear) and the like is attached to the intermediate wall through an opposite rear opening of the housing.

In the power transmission device thus configured, the first unit and the second unit are typically attached to the housing in the following manner.

The housing is mounted on a workbench in a posture with a central axis of the housing directed vertically. In this case, the housing is initially brought into a state (first state) with the rear opening directed upward.

In the first state, the second unit is suspended, lowered, and inserted through the rear opening of the housing, and is attached to the intermediate wall by a bolt or the like.

The housing in the first state is subsequently inverted by 180 degrees to be brought into a state (second state) with the front opening directed upward. In the second state, the first unit is suspended, lowered, and inserted through the front opening of the housing, and is attached to the intermediate wall by a bolt or the like. The front lid is then attached.

Assembly of the power transmission device conventionally includes inverting the housing by 180 degrees during the course in this manner, and thus takes time.

In view of this, the present disclosure provides a power transmission device that can be assembled more easily than a conventional device.

### [ADVANTAGEOUS EFFECTS OF THE INVENTION]

The power transmission device according to the present disclosure is assembled more easily than a conventional device.

### [Summary of embodiment of the present disclosure]

Listed and described hereinafter are summarized features of an embodiment of the present disclosure.
(1) A power transmission device according to the present embodiment includes a housing, and a power transmission instrument including a plurality of gears accommodated in the housing. The housing includes an outer peripheral wall covering to surround the power transmission instrument, and a front wall covering the power transmission instrument from ahead thereof. The housing is shaped to be opened backward. The power transmission instrument is positioned behind the front wall except for a member penetrating the front wall.

During assembly of the power transmission device, the power transmission instrument including the plurality of gears can be incorporated from behind the housing. This eliminates time and effort for vertically inverting the housing as in a conventional device. The power transmission device is assembled more easily than the conventional device.

(2) In the power transmission device according to (1) described above, the housing includes a single cast product. A portion of the cast product corresponds to the outer peripheral wall, and a different portion of the cast product corresponds to the front wall.

The outer peripheral wall and the front wall are provided integrally to eliminate work of attaching the front wall to the outer peripheral wall.

(3) In the power transmission device according to (2) described above, the front wall is positioned at a front portion of the outer peripheral wall. The front wall includes a connection wall portion connected to the front portion, and a tubular wall portion extending forward from the connection wall portion. The tubular wall portion is provided with a through hole allowing the member penetrating the front wall to pass therethrough.

The tubular wall portion of the front wall is shaped to be along a portion including the member penetrating the front wall in the power transmission instrument. This configuration can thus suppress a redundant space in an internal space of the housing.

(4) In the power transmission device according to any one of (1) to (3) described above, the power transmission instrument includes a plurality of units. Each of the units includes a holder coupled to the outer peripheral wall or the front wall.

Each of the units is incorporated into the housing from behind thereof, and is coupled to the outer peripheral wall or the front wall by the holder. The power transmission device is assembled in this manner with excellent workability.

(5) In the power transmission device according to (4) described above, the holder includes a joint surface to be joined to the front wall or the outer peripheral wall. All the joint surfaces are front-facing surfaces or a surface directed toward an inner surface of the outer peripheral wall.

When each of the units is incorporated into the housing from behind thereof, the joint surface of the holder in the unit matches a rear-facing surface (joined surface) of the front wall or the inner surface (joined surface) of the outer peripheral wall. Each of the units can be fixed to the housing by a bolt or the like in the state where the joint surface of the holder matches the joined surface of the housing with excellent workability.

(6) In the power transmission device according to (4) or (5) described above, the holder retains a component included in the power transmission instrument. The plurality of units includes the unit including a plurality of divided holders. The plurality of divided holders includes joint surfaces to connect the divided holders.

The holder retains the component included in the power transmission instrument. First one of the divided holders is connected to second one of the divided holders to obtain a single unit including a plurality of components. This configuration enables individual attachment of the units to achieve excellent workability.

### [Details of embodiment of the present disclosure]

An embodiment of the present disclosure will be described in detail hereinafter with reference to the drawings. At least parts of the embodiment described hereinafter may be combined appropriately.

### <Regarding vehicle>

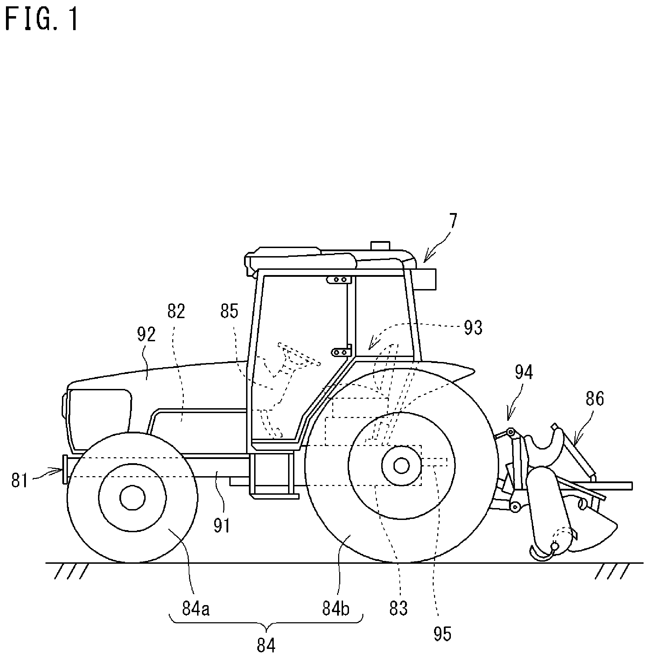

FIG. 1 is a side view exemplarily illustrating a working vehicle. The working vehicle illustrated in FIG. 1 is a tractor 7 as a vehicle used for agricultural work. The tractor 7 includes a vehicle body 81, a prime mover 82, a power transmitter 83, a travel device 84, and a steering device 85.

As illustrated in FIG. 1, a working device 86 is coupled to the vehicle body 81. The tractor 7 travels in a work area such as a farm field, and the working device 86 executes work in the work area. The working device 86 is exemplified by a tiller configured to till a farm field. The working device 86 is not limited to the tiller, and examples of the working device 86 may also include a seeder.

The vehicle body 81 includes a chassis 91, a body 92 as an exterior, a driver seat 93, and a coupling mechanism 94. The coupling mechanism 94 is mounted on a rear portion of the chassis 91 to couple the working device 86 to the chassis 91 (vehicle body 81).

The travel device 84 includes a front wheel 84a and a rear wheel 84b. The front wheel 84a and the rear wheel 84b may be of a tire type or a crawler type. The front wheel 84a functions as a steering wheel in the present embodiment. The steering device 85 changes a rolling direction of the front wheel 84a to determine a travel direction of the vehicle body 81. At least one of the front wheel 84a or the rear wheel 84b functions as a drive wheel configured to transmit power generated by the prime mover 82 to a road surface. The power transmitter 83 includes a clutch configured to switch the drive wheel.

The prime mover 82 is power-driven machinery configured to generate travel power of the tractor 7. The tractor 7 travels when the prime mover 82 drives the drive wheel of the travel device 84. The prime mover 82 according to the present embodiment is a diesel engine. Alternatively, the prime mover 82 may be an electric motor, or may be constituted by an engine and a motor combined with each other.

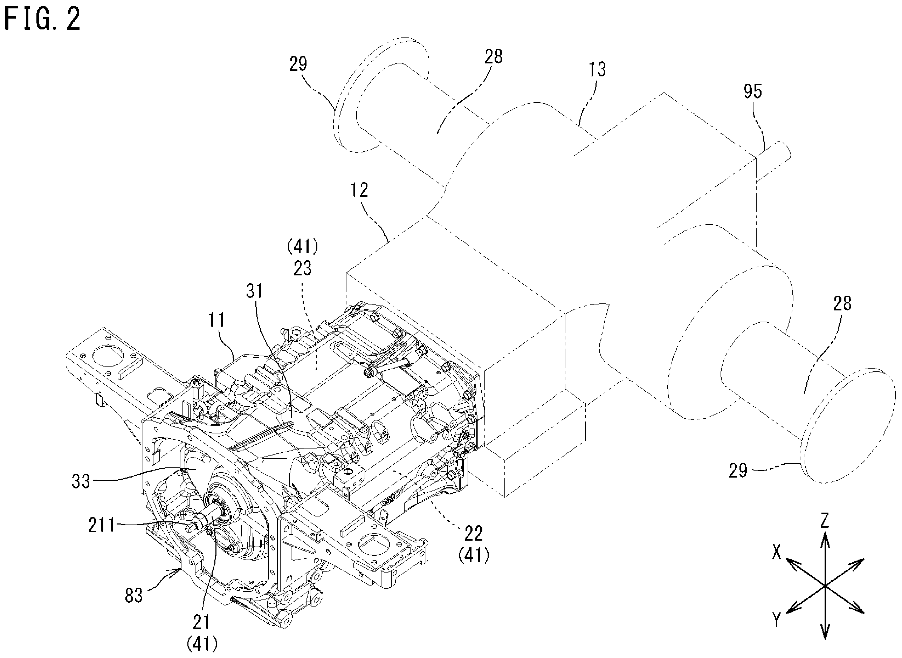

The power transmitter 83 is a device configured to transmit power from the prime mover 82 to the travel device 84. FIG. 2 is a perspective view exemplarily illustrating the power transmitter 83. The power transmitter 83 illustrated in FIG. 2 includes a first block 11, a second block 12, and a third block 13. FIG. 2 includes two-dot chain lines as imaginary lines illustrating the second block 12 and the third block 13. The power transmitter 83 is applicable to any other working vehicle as well as to the tractor 7.

The power transmitter 83 includes a plurality of shafts including an input shaft (main shaft) 21, a gearbox 22 configured to change speed, and a power transmission instrument such as a clutch 23. The input shaft 21 is rotated by rotary power generated by the prime mover 82. The power transmitter 83 includes the first block 11 having the input shaft 21, the second block 12, and the third block 13 having a PTO shaft 95 to be described later in the mentioned order from a front side adjacent to the input shaft 21 to a rear side adjacent to the PTO shaft 95.

The rotary power of the input shaft 21 is transmitted to left and right flanges 29 included in the third block 13 via the gearbox 22 and the like. The flanges 29 each attach the rear wheel 84b functioning as the drive wheel. The rotary power of the input shaft 21 is transmitted to the travel device 84 (rear wheel 84b). The gearbox 22 and the clutch 23 included in the power transmitter 83 function to switch thrust power and travel speed of the travel device 84.

The power transmitter 83 includes a power takeoff mechanism (hereinafter, referred to as "PTO mechanism"). The PTO mechanism includes the PTO shaft 95 as one of output shafts of the power transmitter 83. The PTO shaft 95 is rotated by power transmitted from the input shaft 21 via the gearbox 22 and the like. The PTO shaft 95 functions as an output shaft configured to move the working device 86 (see FIG. 1).

Directions of the power transmitter 83 are defined as follows. In the power transmitter 83, the input shaft 21 has a tip positioned on the front side whereas the PTO shaft 95 has a tip positioned on the rear side. The power transmitter 83 includes an axle 28 provided with the flanges 29. The axle 28 extends in a transverse direction perpendicular to an anteroposterior direction. Both the anteroposterior direction and the transverse direction are perpendicular to a vertical direction.

The power transmitter 83 has three axes perpendicular to one another defined as an X axis, a Y axis, and a Z axis. The anteroposterior direction is along the Y axis, the transverse direction is along the X axis, and the vertical direction is along the Z axis. Each of the drawings include the three axes perpendicular to one another.

The first block 11 and the second block 12 are coupled to each other, and the second block 12 and the third block 13 are coupled to each other. The first block 11, the second block 12, and the third block 13 are assembled individually at an assembly plant. The first block 11, the second block 12, and the third block 13 are then coupled together to obtain the single power transmitter 83 illustrated in FIG. 2.

### <Regarding first block 11>

Description is made to the first block 11. The first block 11 corresponds to the power transmission device according to the present invention. The first block 11 will be called a "power transmission device 11" in the following description.

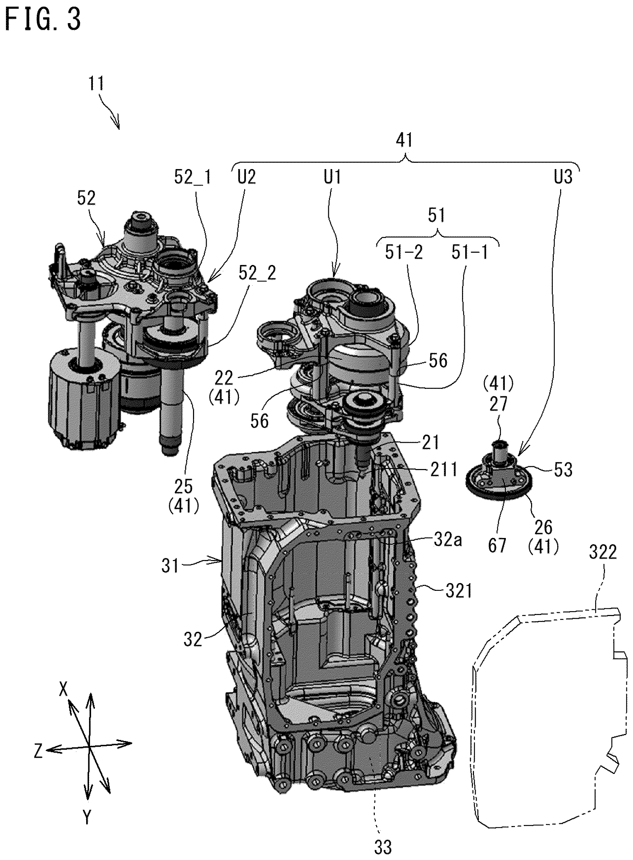

FIG. 3 is an exploded view of the power transmission device 11. FIG. 3 illustrates how the power transmission device 11 is assembled. The power transmission device 11 includes a housing 31, and a power transmission instrument 41 including pluralities of gears and shafts and the like accommodated in the housing 31. The power transmission instrument 41 includes the input shaft 21. As illustrated in FIG. 2, the input shaft 21 includes a tip portion 211 projecting forward from a front wall 33 of the housing 31 to be exposed from the housing 31. The power transmission instrument 41 includes the gearbox 22 and the clutch 23. The gearbox 22 includes mechanical elements such as pluralities of gears, shafts, bearings, and the like.

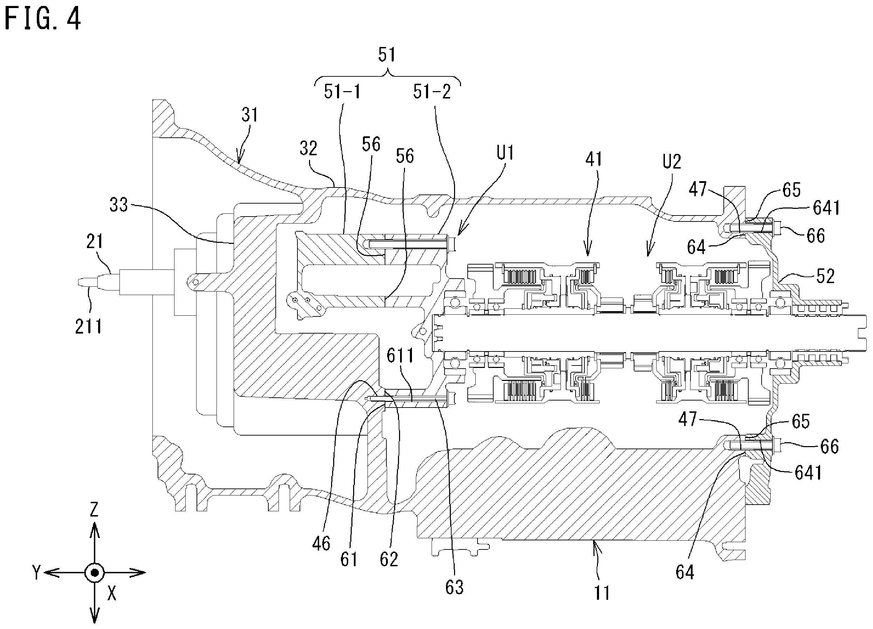

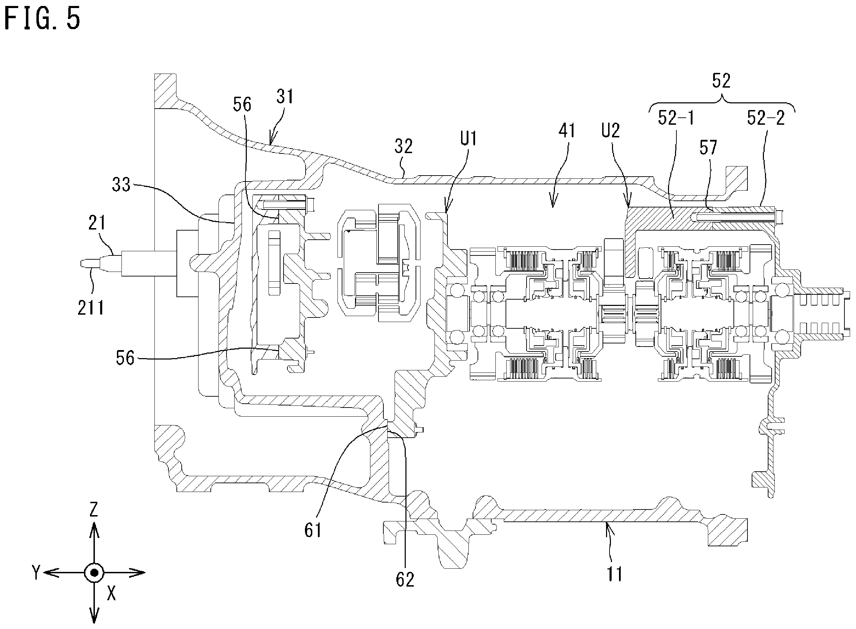

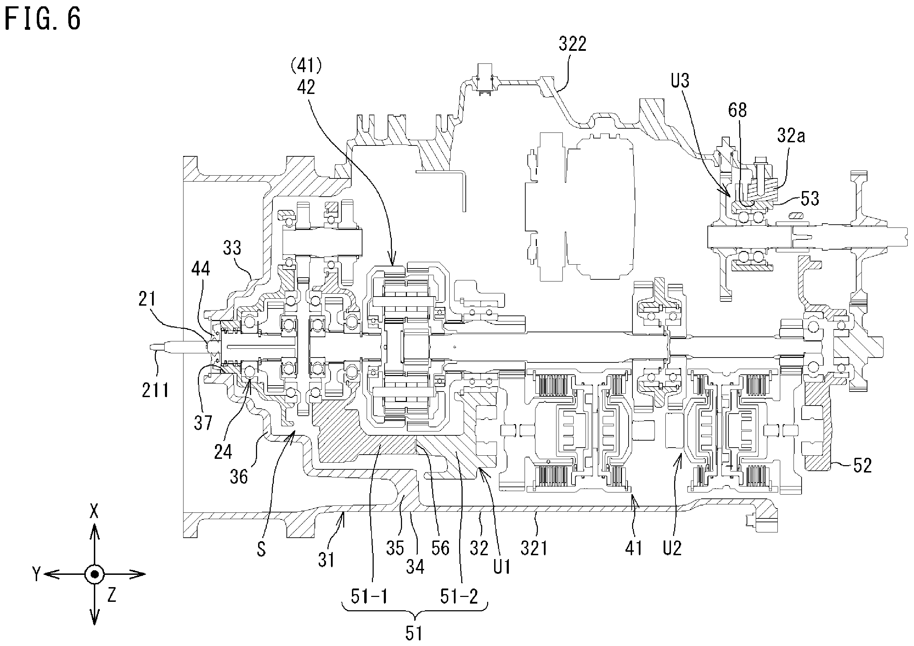

FIG. 4, FIG. 5, and FIG. 6 are sectional views of the power transmission device 11. FIG. 4 and FIG. 5 each illustrate a section in a plane perpendicular to an imaginary straight line extending in the transverse direction (along the X axis). FIG. 4 and FIG. 5 illustrate sections in planes different from each other. FIG. 6 illustrates a section in a plane perpendicular to an imaginary straight line extending in the vertical direction (along the Z axis).

The housing 31 includes an outer peripheral wall 32 and the front wall 33. The outer peripheral wall 32 (see FIG. 3) includes a peripheral wall portion 321 having an opening on one side in the transverse direction (along the X axis), and a side wall portion 322 closing the opening in the peripheral wall portion 321. The side wall portion 322 is detachable from the peripheral wall portion 321. FIG. 3 includes two-dot chain lines as imaginary lines illustrating the side wall portion 322, and illustrates a state where the side wall portion 322 is detached.

As illustrated in FIG. 3 to FIG. 6, the outer peripheral wall 32 covers to surround the power transmission instrument 41 including the gears and the like. That is, the outer peripheral wall 32 covers the power transmission instrument 41 from four sides in the transverse direction (both sides of the X axis) and the vertical direction (both sides of the Z axis). The front wall 33 covers the power transmission instrument 41 from ahead thereof. The front wall 33 zones an internal space of the housing 31 and an area ahead thereof. The housing 31 includes the front wall 33 thus configured, but does not include any other wall anteroposteriorly zoning the internal space of the housing 31. That is, the housing 31 does not include any wall positioned behind the front wall 33, and is shaped to be opened backward.

The housing 31 includes a single cast product including a portion corresponding to the outer peripheral wall 32 and a different portion corresponding to the front wall 33. The outer peripheral wall 32 and the front wall 33 are casted integrally to eliminate work of attaching the front wall 33 to the outer peripheral wall 32. Respective portions of the cast product are mechanically processed to form joint surfaces to be described later.

According to a variation, the outer peripheral wall 32 and the front wall 33 may be provided as separate components. In this case, the front wall 33 is attached to part of the outer peripheral wall 32 by a fastening member such as a bolt.

As illustrated in FIG. 4, FIG. 5, and FIG. 6, the power transmission instrument 41 is positioned behind the front wall 33 except for a member penetrating the front wall 33. The "member penetrating the front wall 33" corresponds to the input shaft 21. The tip portion 211 of the input shaft 21 is positioned ahead of the front wall 33 in the anteroposterior direction (along the Y axis).

As illustrated in FIG. 3, the power transmission instrument 41 including the plurality of gears and the like is thus incorporated from behind the housing 31 during assembly of the power transmission device 11. This eliminates time and effort for vertically inverting the housing 31 as in a conventional device. The power transmission device 11 is assembled more easily than the conventional device.

As illustrated in FIG. 6, the front wall 33 is positioned at a front portion 34 of the outer peripheral wall 32. The front wall 33 includes a connection wall portion 35 connected to the front portion 34, and a tubular wall portion 36 extending forward from the connection wall portion 35. The tubular wall portion 36 is provided with a through hole 37. The through hole 37 allows the input shaft 21 as the member penetrating the front wall 33 to pass therethrough. The input shaft 21 and the through hole 37 interpose a seal member 44.

The tubular wall portion 36 is shaped to be along a portion including the member (input shaft 21) penetrating the front wall 33 in the power transmission instrument 41. Specifically, the input shaft 21 and a bearing portion 24 supporting the input shaft 21 constitute a bearing unit shaped to be decreased forward in outer diameter. The tubular wall portion 36 is then shaped to be decreased in outer and inner circumferential profiles so as to be along the shape of the bearing unit.

The front wall 33 thus shaped can suppress a redundant space in an internal space S (particularly a front space) of the housing 31. Even in an exemplary case where the power transmitter 83 (see FIG. 2) is inclined to have a descended front portion, lubricant oil reserved in the housing 31 is suppressed from flowing into such a redundant space. This achieves a reduction in the volume of the lubricant oil.

As illustrated in FIG. 3, the power transmission instrument 41 includes a plurality of units. The power transmission instrument 41 according to the present embodiment includes a first unit U1, a second unit U2, and a third unit U3. Each of the first unit U1, the second unit U2, and the third unit U3 is a semifinished product including a plurality of elements such as a gear, a shaft, and a bearing. The number of units constituting the power transmission instrument 41 is not limited to three, and may be two, or four or more.

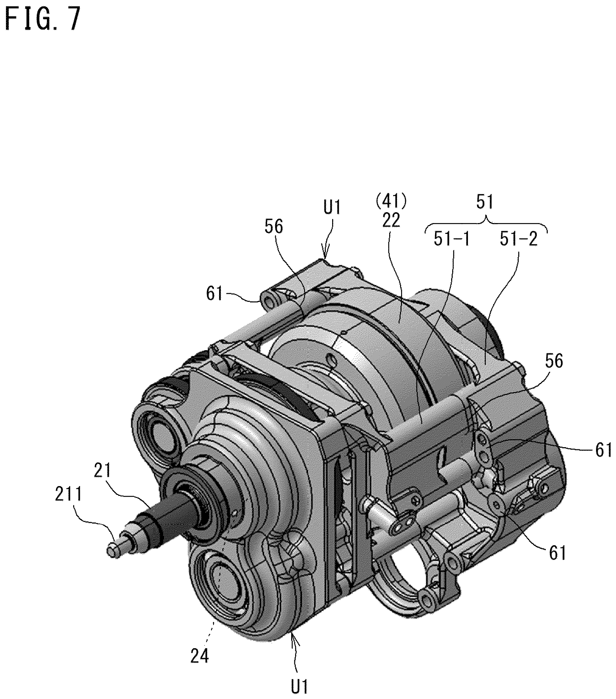

The first unit U1 includes a first holder 51. The first holder 51 is a frame member retaining a plurality of components included in the power transmission instrument 41. FIG. 7 is a perspective view of the first unit U1. The components retained by the first holder 51 include the input shaft 21, the bearing portion 24 supporting the input shaft 21, and the gears constituting the transmission gear (gearbox 22). The plurality of components is assembled to be collectively integrated by the first holder 51.

The first unit U1 according to the present embodiment includes a plurality of (two in illustrated exemplification) first divided holders 51-1 and 51-2. That is, the first holder 51 configured to integrate the first unit U1 is divided into the plurality of divided holders. The first divided holders 51-1 and 51-2 include joint surfaces 56 to connect the first divided holders 51-1 and 51-2. The first divided holder 51-1 and the first divided holder 51-2 are joined on the joint surfaces 56 and are then connected to each other by a fastening member such as a bolt.

As described above, the first holder 51 retains the components such as the transmission gear (gearbox 22) included in the power transmission instrument 41. The first divided holder 51-1 is connected to the first divided holder 51-2 to obtain the single first unit U1 including a plurality of components. As illustrated in FIG. 3, independently from the second unit U2 and the third unit U3, the first unit U1 is attached to the housing 31 and integrally includes the plurality of components so as to achieve excellent workability of attachment thereof.

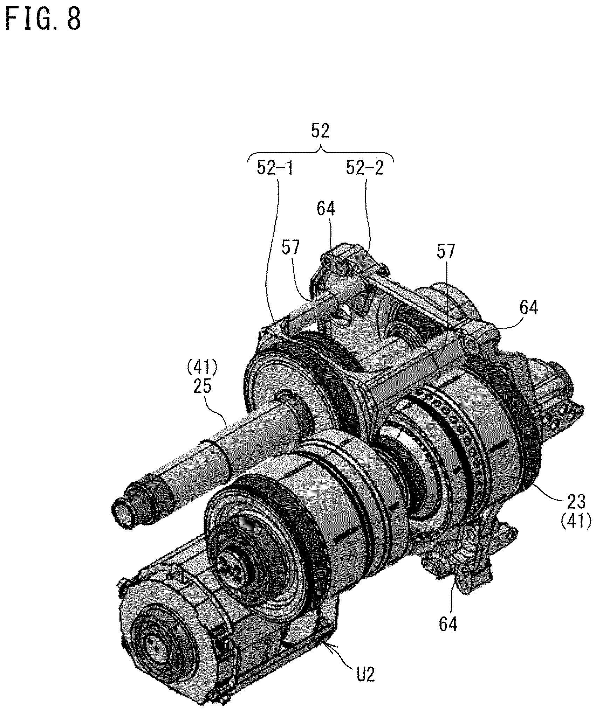

FIG. 8 is a perspective view of the second unit U2. The second unit U2 includes a second holder 52. The second holder 52 is a frame member retaining a plurality of components included in the power transmission instrument 41. The components retained by the second holder 52 include an intermediate shaft 25 configured to be rotated by rotary power received from the input shaft 21, the clutch 23, and the like. The plurality of components is assembled to be collectively integrated by the second holder 52.

The second unit U2 according to the present embodiment includes a plurality of (two in illustrated exemplification) second divided holders 52-1 and 52-2. That is, the second holder 52 configured to integrate the second unit U2 is divided into the plurality of divided holders. The second divided holders 52-1 and 52-2 include joint surfaces 57 to connect the second divided holders 52-1 and 52-2. The second divided holder 52-1 and the second divided holder 52-2 are joined on the joint surfaces 57 and are then connected to each other by a fastening member such as a bolt.

As described above, the second holder 52 retains the components such as the clutch 23 included in the power transmission instrument 41. The second divided holder 52-1 is connected to the first divided holder 52-2 to obtain the single second unit U2 including a plurality of components. As illustrated in FIG. 3, independently from the first unit U1 and the third unit U3, the second unit U2 is attached to the housing 31 and integrally includes the plurality of components so as to achieve excellent workability of attachment thereof.

As described above, the first unit U1 (second unit U2) includes the plurality of (two) divided holders. That is, the plurality of units (the three units U1, U2, and U3 in the present embodiment) includes the first unit U1 and the second unit U2 as units each including the plurality of divided holders. The first unit U1 (second unit U2) includes the joint surfaces 56 (joint surfaces 57) to connect the divided holders.

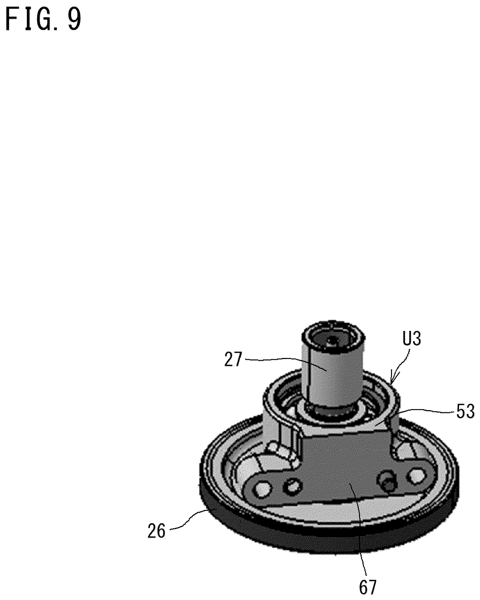

FIG. 9 is a perspective view of the third unit U3. The third unit U3 includes a third holder 53. The third holder 53 is a frame member retaining a plurality of components included in the power transmission instrument 41. The components retained by the third holder 53 include a gear 26, a gear shaft 27, and the like. The plurality of components is assembled to be collectively integrated by the third holder 53.
Description is made next to a structure for attaching the first unit U1, the second unit U2, and the third unit U3 to the housing 31.

The first holder 51 (see FIG. 4) is coupled to the front wall 33 of the housing 31. The first holder 51 therefore includes a plurality of joint surfaces 61 to be joined to the front wall 33. All the joint surfaces 61 are front-facing surfaces. The housing 31 includes a joined surface 62 to be joined to each of the joint surfaces 61. The joined surface 62 is a rear-facing surface. In a state where each of the joint surfaces 61 and the joined surface 62 are in surface contact to match each other, the first holder 51 of the first unit U1 is attached to the housing 31 by a fastening member such as a bolt 63.

The first holder 51 includes a portion having the joint surfaces 61 and provided with a through hole 611 penetrating anteroposteriorly. The housing 31 includes a portion having the joined surface 62 and provided with a bolt hole 46 opened backward. The bolt 63 is inserted forward to the through hole 611 from behind and is further inserted to the bolt hole 46 to be fastened. The first holder 51 fixes the first unit U1 to the housing 31.

The second holder 52 is coupled to a rear portion of the outer peripheral wall 32 of the housing 31. The second holder 52 therefore includes a plurality of joint surfaces 64 to be joined to the outer peripheral wall 32. All the joint surfaces 64 are front-facing surfaces. The housing 31 includes a joined surface 65 to be joined to each of the joint surfaces 64. The joined surface 65 is a rear-facing surface. In a state where each of the joint surfaces 64 and the joined surface 65 are in surface contact to match each other, the second holder 52 of the second unit U2 is attached to the housing 31 by a fastening member such as a bolt 66.

The second holder 52 includes a portion having the joint surfaces 64 and provided with a through hole 641 penetrating anteroposteriorly. The housing 31 includes a portion having the joined surface 65 and provided with a bolt hole 47 opened backward. The bolt 66 is inserted forward to the through hole 641 from behind and is further inserted to the bolt hole 47 to be fastened. The second holder 52 fixes the second unit U2 to the housing 31.

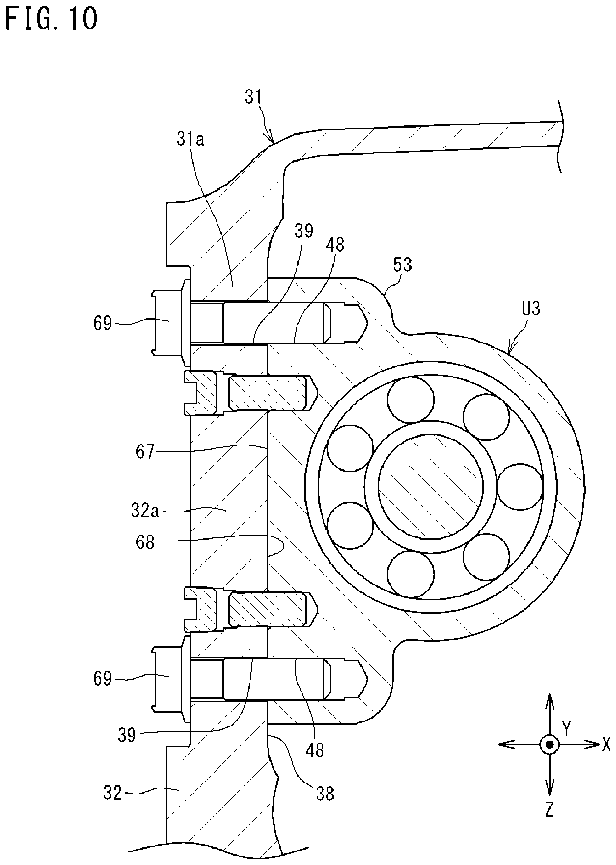

The third holder 53 (see FIG. 3 and FIG. 6) is coupled to a portion 32a of the outer peripheral wall 32 of the housing 31. The third holder 53 therefore includes a joint surface 67 to be joined to the portion 32a of the outer peripheral wall 32. FIG. 10 is an explanatory view of an attachment portion of the third holder 53 to the portion 32a of the outer peripheral wall 32. The joint surface 67 is directed toward an inner surface 38 of the portion 32a of the outer peripheral wall 32.

The housing 31 includes a joined surface 68 to be joined to the joint surface 67. The joined surface 68 is directed toward a center portion of an internal space surrounded with the outer peripheral wall 32. In a state where the joint surface 67 and the joined surface 68 are in surface contact to match each other, the third holder 53 of the third unit U3 is attached to the housing 31 by a fastening member such as a bolt 69.

The third holder 53 includes a portion having the joint surface 67 and provided with a bolt hole 48 opened toward the inner surface 38 of the housing 31. The housing 31 includes a portion having the joined surface 68 and provided with a through hole 39 penetrating perpendicularly (along the X axis in illustrated exemplification) to the anteroposterior direction. The bolt 69 is inserted inward to the through hole 39 from outside the housing 31 and is further inserted to the bolt hole 48 to be fastened. The third holder 53 fixes the third unit U3 to the housing 31.

As described above, the three units U1, U2, and U3 include the holders 51, 52, and 53, respectively, which are coupled to the outer peripheral wall 32 or the front wall 33. As illustrated in FIG. 3, the units U1, U2, and U3 are respectively incorporated to the housing 31 from behind thereof. The units U1, U2, and U3 are coupled to the outer peripheral wall 32 or the front wall 33 by the holders 51, 52, and 53, respectively, to assemble the power transmission device 11. The units U1, U2, and U3 are individually assembled to the housing 31 with excellent workability.

Particularly in the present embodiment, the holders 51, 52, and 53 include the joint surfaces 61, 64, and 67, respectively, to be joined to the front wall 33 or the outer peripheral wall 32. All the joint surfaces 61, 64, and 67 are front-facing surfaces or surfaces directed toward the inner surface 38 of the outer peripheral wall 32. When the units U1, U2, and U3 are respectively incorporated to the housing 31 from behind thereof, the joint surfaces 61, 64, and 67 of the holders 51, 52, and 53 included in the units U1, U2, and U3 match the rear-facing surface (joined surface 62, see FIG. 4) of the front wall 33, the rear-facing surface (joined surface 65, see FIG. 4) of the outer peripheral wall 32, or the inner surface 38 (joined surface 68, see FIG. 6) of the outer peripheral wall 32.

The units U1, U2, and U3 can be fixed to the housing 31 by the bolts 63, 66, and 69 in the state where the joint surfaces 61, 64, and 67 of the holders 51, 52, and 53 match the joined surfaces 62, 65, and 68 of the housing 31, respectively, to achieve excellent workability.

The power transmission device 11 according to the present embodiment is therefore assembled more easily than a conventional device.

### <Others>

The embodiment described above is exemplary and nonrestrictive on any point. The present invention provides the scope of rights recited not by the above embodiment but by the claims and including any change within a range equivalent to each configuration recited in the claims.

### REFERENCE SIGNS LIST

- 11: power transmission device (first block)
- 31: housing
- 32: outer peripheral wall
- 33: front wall
- 34: front portion
- 35: connection wall portion
- 36: tubular wall portion
- 37: through hole
- 41: power transmission instrument
- 51: first holder
- 51-1, 51-2: first divided holder
- 52: second holder
- 52-1, 52-2: second divided holder
- 53: third holder
- 56: joint surface
- 57: joint surface
- 61: joint surface
- 64: joint surface
- 67: joint surface
- U1: first unit
- U2: second unit
- U3: third unit

## Claims

1. A power transmission device (11) comprising:
a housing (31), and a power transmission instrument (41) including a plurality of gears accommodated in the housing (31), wherein
the housing (31) includes an outer peripheral wall (32) covering to surround the power transmission instrument (41), and a front wall (33) covering the power transmission instrument (41) from ahead thereof, the housing (31) is shaped to be opened backward, and
the power transmission instrument (41) is positioned behind the front wall (33) except for a member penetrating the front wall (33).

2. The power transmission device (11) according to claim 1, wherein
the housing (31) includes a single cast product, a portion of the cast product corresponds to the outer peripheral wall (32), and a different portion of the cast product corresponds to the front wall (33).

3. The power transmission device (11) according to claim 1 or 2, wherein
the front wall (33) is positioned at a front portion (34) of the outer peripheral wall (32),
the front wall (33) includes a connection wall portion (35) connected to the front portion (34), and a tubular wall portion (36) extending forward from the connection wall portion (35), and
the tubular wall portion (36) is provided with a through hole (37) allowing the member penetrating the front wall (33) to pass therethrough.

4. The power transmission device (11) according to any one of claims 1 to 3, wherein
the power transmission instrument (41) includes a plurality of units (U1,U2,U3), and
each of the units (U1,U2,U3) includes a holder (51,52,53) coupled to the outer peripheral wall (32) or the front wall (33).

5. The power transmission device (11) according to claim 4, wherein
the holder (51,52,53) includes a joint surface (61,64,67) joined to the front wall (33) or the outer peripheral wall (32), and
all the joint surfaces (61,64,67) are front-facing surfaces or a surface directed toward an inner surface (38) of the outer peripheral wall (32).

6. The power transmission device (11) according to claim 4 or 5, wherein
the holder (51,52,53) retains a component included in the power transmission instrument (41),
the plurality of units (U1,U2,U3) includes the unit having a plurality of divided holders, and
the plurality of divided holders includes joint surfaces (56,57) configured to connect the divided holders.
